# EUROPÄISCHE PATENTSCHRIFT

(11) **EP 3 463 966 B1**
(45) Veröffentlichungstag und Bekanntmachung des Hinweises auf die Patenterteilung: **23.12.2020**
(21) Anmeldenummer: 17728143.3
(22) Anmeldetag: 31.05.2017
(51) Int. Cl.: B60L 15/00, H02M 3/158, B60L 53/14, B60L 53/24, H02M 7/5387, H02M 7/219

(54) **FAHRZEUGBORDNETZ MIT WECHSELRICHTER, ENERGIESPEICHER, ELEKTRISCHER MASCHINE UND WECHSELSTROM-ÜBERTRAGUNGSANSCHLUSS**
VEHICLE POWER NETWORK WITH CONVERTER, ENERGY STORAGE, ELECTRICAL MACHINE AND AC-TRANSFER CONNECTION
RÉSEAU DE BORD D'UN VÉHICULE AVEC CONVERTISSEUR, ACCUMULATEUR D'ÉNERGIE, MACHINE ÉLECTRIQUE ET CONNECTION DE TRANSFER DE COURANT ALTERNATIF

(30) Priorität: 06.06.2016 DE 102016209872
(43) Veröffentlichungstag der Anmeldung: 10.04.2019
(73) Patentinhaber: Vitesco Technologies GmbH, 30165 Hannover (DE)
(72) Erfinder: TÖNS, Matthias, 93049 Regensburg (DE); BRÜLL, Martin, 93092 Barbing (DE); EHRMANN, Martin, 90482 Nürnberg (DE); FEUSTEL, Hans-Peter, 91154 Roth (DE); PFEILSCHIFTER, Franz, 93059 Regensburg (DE)
(74) Vertreter: Waldmann, Georg Alexander
(86) Internationale Anmeldenummer: PCT/EP2017/063222
(87) Internationale Veröffentlichungsnummer: WO 2017/211655

(56) Entgegenhaltungen:
- DE-A1-102008 063 465
- JP-A- 2002 165 370
- US-A1- 2014 340 039
- US-A1- 2014 368 131

## Beschreibung

Kraftfahrzeuge mit einem elektrischen Antrieb, d.h. Elektrofahrzeuge und Hybridfahrzeuge, umfassen einen elektrischen Energiespeicher zur Versorgung des elektrischen Antriebs. Elektrofahrzeuge und Plug-In-Hybride sind mit einem Anschluss ausgestattet, mittels dem sich Energie von einem stationären elektrischen Versorgungsnetz (lokal oder öffentlich) zum Aufladen des Energiespeichers an diesen übertragen lässt. Gegebenenfalls sind die Fahrzeuge auch ausgestattet, elektrische Energie an das Versorgungsnetz zurückzuspeisen.

Zur Übertragung elektrischer Energie zwischen Versorgungsnetz und Fahrzeug sind leistungselektronische Komponenten erforderlich, insbesondere zur Steuerung der Energieübertragung. US2014/368131A1 offenbart ein Fahrzeugbordnetz mit Motor, Energiespeicher und Wechselrichter gemäss dem Stand der Technik, wobei der Wechselrichter zusammen mit einem Transformator gebraucht werden, um Leistung vom Motor oder von einer Wechselspannungsquelle an den Energiespeicher zu übertragen.

Es ist eine Aufgabe der Erfindung, eine Möglichkeit aufzuzeigen, mit der sich der Aufwand an derartigen Komponenten reduzieren lässt.

Diese Aufgabe wird gelöst durch den Gegenstand des unabhängigen Anspruchs. Weitere Vorteile, Merkmale, Ausführungsformen und Eigenschaften ergeben sich mit den abhängigen Ansprüchen sowie aus dieser Beschreibung und den Figuren.

Es ist vorgesehen, dass zur Übertragung eines Wechselstroms an oder vom Fahrzeugbordnetz (eines eingangs beschriebenen Kraftfahrzeugs) Komponenten eines Wechselrichters verwendet werden. Der Wechselrichter weist eine erste und eine zweite Seite auf. Der Wechselrichter ist eingerichtet, Leistung zwischen diesen Seiten zu übertragen, insbesondere bidirektional. Die erste Seite ist an einen (Gleichstrom-)Energiespeicher angeschlossen, insbesondere über einen positiven und einen negativen Eingangsstromanschluss des Wechselrichters. Die erste Seite kann als Gleichstromseite des Wechselrichters betrachtet werden. Die zweite Seite des Wechselrichters ist mit einer elektrischen Maschine bzw. deren Phasen verbunden, insbesondere über Phasenstromanschlüsse des Wechselrichters. Der Wechselrichter weist mindestens 2 H-Brücken auf, die die beiden Seiten (d.h. die erste und die zweite Seite des Wechselrichters) überbrücken. Ein Teil jeder Brücke kann der ersten Seite zugeordnet werden und ein Teil jeder Brücke kann der zweiten Seite zugeordnet werden. Die H-Brücke verbindet in Reihenschaltung die beiden Seiten miteinander. Insbesondere kann jede H-Brücke jeweils einen Querzweig für jede der beiden Seiten aufweisen. Dieser Querzweig kann auch als Arm bezeichnet werden. Jeder Querzweig bzw. Arm verbindet mittels (steuerbarer) Schalter die beiden Eingangsstromanschlüsse. Eine Verbindung zwischen den Armen bzw. Querzweigen (insbesondere umfassend eine Serien-Induktivität) verbindet die beiden Seiten des Wechselrichters. Der Wechselstrom-Übertragungsanschluss ist mit der zweiten Seite des Wechselrichters verbunden, insbesondere mit der zweiten Seite bzw. mit Abschnitten von H-Brücken, die der zweiten Seite zugeordnet sind. Der Wechselstrom-Übertragungsanschluss kann mit den Phasenstromanschlüssen (der zweiten Seite) des Wechselrichters verbunden sein oder mit den Querzweigen von mindestens zwei H-Brücken, wobei sich die Querzweige in der zweiten Seite des Wechselrichters befinden. Der Wechselstrom-Übertragungsanschluss kann insbesondere mit den Seiten der Induktivitäten der Brücken verbunden sein, wobei sich dies auf die Seiten der Induktivitäten bezieht, die sich in der zweiten Seite befinden bzw. die mit einem Arm verbunden sind, der der zweiten Seite zugeordnet ist (und sich auch dort befindet) . Die H-Brücken des Wechselrichters können jeweils zwei Arme aufweisen. Diese verbinden den positiven Eingangsstromanschluss mit dem negativen Eingangsstromanschluss mittels zweier serieller Halbleiterschalter. Die zwei seriellen Halbleiterschalter sind somit parallel zu den beiden Eingangsstromanschlüssen geschaltet. Die Halbleiterschalter jedes Arms sind an Verbindungspunkten miteinander verbunden. Die beiden Verbindungspunkte jeder H-Brücke sind mittels einer Induktivität miteinander verbunden.

Der Wechselstrom-Übertragungsanschluss (etwa ein Plug-In-Steckanschluss oder auch eine fahrzeugseitige Vorrichtung zur induktiven Energieübertragung) kann an die der elektrischen Maschine zugewandten (zweiten) Seite des Wechselrichters angeschlossen sein, insbesondere an zumindest einen Phasenstromanschluss des Wechselrichters oder an einen anderen Anschlusspunkt, der sich in der zweiten Seite des Wechselrichters befindet. Der Wechselstrom-Übertragungsanschluss kann direkt mit Phasenstromanschlüssen des Wechselrichters verbunden sein, oder kann über eine elektrische Maschine (des elektrischen Antriebs des Fahrzeugs), die mit Phasenstromanschlüssen verbunden ist, mit dem Wechselrichter verbunden sein. Die Verbindung zwischen Wechselstrom-Übertragungsanschluss und dem Wechselrichter bzw. dessen zweiter Seite, insbesondere zwischen Wechselstrom-Übertragungsanschluss und (mindestens einem) Phasenstromanschluss, kann somit direkt oder indirekt über die elektrische Maschine vorgesehen sein.

Dadurch kann ein Fahrzeug direkt von einem Wechselstromnetz geladen werden bzw. kann direkt in dieses Energie abgeben. Ein stationärer Gleichrichter ist dadurch nicht notwendig. Vielmehr wird dessen Funktion vom Wechselrichter realisiert. Die bereits vorhandene Leistungselektronik in Form des Wechselrichters, der insbesondere die Phasenströme für die elektrische Maschine bereitstellt, wird hierbei auch zur Steuerung der Leistung (insbesondere des Stroms und/oder der Spannung) verwendet, die über den Wechselstrom-Übertragungsanschluss übertragen wird. Es ist insbesondere kein weiterer Spannungswandler zur Anpassung an die Spannung des Energiespeichers unbedingt notwendig.

Der Wechselrichter umfasst H-Brücken-Schaltungen. Diese sind zwischen dem elektrischen Energiespeicher und den Phasenstromanschlüssen geschaltet. Dies ermöglicht einen Betrieb des Wechselrichters zur Wandlung zwischen der Gleichspannung des Energiespeichers und den Phasenspannungen der Phasenanschlüsse (d.h. der elektrischen Maschine). Aus dieser Betriebsart wird auch der Begriff "Wechselrichter" abgeleitet, wobei andere Betriebsarten, etwa das Gleichrichten von Wechsel-Ladespannung zur Einspeisung in den Energiespeicher, auch möglich sind, selbst wenn diese nicht in die Begriffsbildung einfließen. Die H-Brücken ermöglichen ferner die Wandlung zwischen der Wechselspannung am Wechselstrom-Übertragungsanschluss und der Gleichspannung des Energiespeichers. Dies betrifft insbesondere die Stromart und die Stromhöhe.

Das hier beschriebene Fahrzeugbordnetz ist wie erwähnt mit einem Wechselrichter, einem elektrischen Energiespeicher, einer elektrischen Maschine und einem Wechselstrom-Übertragungsanschluss ausgestattet. Der Wechselrichter umfasst (mittels Steuersignal steuerbare) Halbleiter-Leistungsschalter. Die Topologie des Wechselrichter und dessen Anbindung innerhalb des Bordnetzes ist im Weiteren dargestellt. Der elektrische Energiespeicher ist insbesondere ein Akkumulator, beispielsweise ein Lithium-basierter Akkumulator. Der elektrische Energiespeicher kann ein Traktionsakkumulator sein. Der Energiespeicher kann eine Nennspannung von 40 - 60 V aufweisen, insbesondere von 48 V, und kann insbesondere eine Nennspannung von mehr als 100 Volt, insbesondere von mindestens 200 oder 300 V, beispielsweise von 350 - 420 V, aufweisen. Der Energiespeicher kann somit ein Hochvolt-Akkumulator sein. Die elektrische Maschine ist insbesondere eine Drehstrommaschine. Die elektrische Maschine kann eine fremderregte oder permanenterregte elektrische Maschine sein. Der Wechselstrom-Übertragungsanschluss kann ein Plugin-Inlet umfassen, d.h. ein elektromechanisches Steckverbindungselement, das sich in der Außenhaut eines Fahrzeugs montieren lässt. Der Wechselstrom-Übertragungsanschluss ist eingerichtet, mit einem Ladestecker (bzw. allgemeiner: Verbindungsstecker) verbunden zu werden.

Der Wechselrichter ist steuerbar bzw. umfasst steuerbare H-Brücken. Der Wechselrichter weist einen positiven Eingangsstromanschluss und einen negativen Eingangsstromanschluss auf. Der Begriff Eingangsstromanschluss ergibt sich aus dem Wechselrichtermodus, in dem der Wechselrichter Leistung von dem Energiespeicher erhält. In diesem Modus erhält der Wechselrichter Leistung über den Eingangsstromanschluss, so dass in diesem Modus dieser Anschluss als Eingang des Wechselrichters dient. Im Lademodus dienen die gleichen Anschlüsse zur Abgabe von Leistung an den Energiespeicher, d.h. als Ausgang des Wechselrichters.

Die Eingangsstromanschlüsse sind mit dem Energiespeicher verbunden. Es kann ein Zwischenkreiskondensator parallel zu dem Energiespeicher bzw. parallel zu den Eingangsanschlüssen des Wechselrichters geschaltet sein.

Der Wechselrichter weist mindestens zwei Phasenstromanschlüsse auf, die mit der elektrischen Maschine verbunden sind. Insbesondere weist der Wechselrichter Phasenstromanschlüsse in einer Anzahl auf, die der Phasenzahl der elektrischen Maschine entspricht. Es kann jeder der Phasenstromanschlüsse mit einer eigenen Phase der elektrischen Maschine verbunden sein. Beispielsweise hat der Wechselrichter drei (oder sechs) Phasenstromanschlüsse, die jeweils an eine von drei (oder sechs) Phasen der elektrischen Maschine angeschlossen sind.

Der Wechselrichter weist eine erste Seite und eine zweite Seite auf. Der Wechselrichter ist eingerichtet, Leistung zwischen diesen Seiten zu übertragen. Die erste Seite des Wechselrichters ist mit dem Energiespeicher verbunden, insbesondere über einen positiven und einen negativen Eingangsstromanschluss des Wechselrichters. Die zweite Seite des Wechselrichters ist mit der elektrischen Maschine verbunden ist, insbesondere über mindestens zwei Phasenstromanschlüsse des Wechselrichters.

Der Wechselrichter weist mindestens zwei H-Brücken auf. Die H-Brücken überbrücken die beiden Seiten. Ein Abschnitt jeder H-Brücke (insbesondere ein Arm der beidem Arme) ist Teil der ersten Seite und ein weiterer Abschnitt jeder H-Brücke (insbesondere der andere der beiden Arme) ist Teil der zweiten Seite. Die H-Brücken sind jeweils zwischen den Eingangsstromanschlüssen und den Phasenstromanschlüssen angeschlossen. Die H-Brücken sind in Reihe zwischen den Eingangsstromanschlüssen und den Phasenstromanschlüssen angeschlossen. Die H-Brücken sind parallel zueinander angeschlossen (zumindest hinsichtlich der Eingangsstromanschlüsse). Die H-Brücken sind individuell mit einzelnen Phasen der elektrischen Maschine verbunden.

Jede H-Brücke umfasst zwei Arme. Ein erster dieser Arme (in der ersten Seite gelegen) verbindet die beiden Eingangsstromanschlüsse. Ein zweiter dieser Arme (in der zweiten Seite gelegen) verbindet einen Eingangsstromanschluss (insbesondere den negativen) und einen Phasenstromanschluss. Jeder Arm umfasst zwei Schaltelemente, die über einen Verbindungspunkt miteinander verbunden sind. Die beiden Verbindungspunkte jeder H-Brücke (d.h. der Verbindungspunkt des einen Arms und der Verbindungspunkt des anderen Arms der gleichen H-Brücke) sind über eine Induktivität miteinander verbunden.

Die Schaltelemente, insbesondere Halbleiterschalter, jedes Arms sind an Verbindungspunkten miteinander verbunden. Die beiden Verbindungspunkte jeder H-Brücke sind mittels einer Induktivität miteinander verbunden. Die Induktivität ist insbesondere als diskretes Bauelement ausgestaltet, beispielsweise als Spule mit Kern. Die Induktivität weist einen ersten Anschluss bzw. eine erste Seite auf, die der ersten Seite zugehört. Die Induktivität weist einen zweiten Anschluss bzw. eine zweite Seite auf, die der zweiten Seite zugehört. Der erste Anschluss der Induktivität ist mit einem Verbindungspunkt eines Arms der ersten Seite verbunden. Der zweite Anschluss der Induktivität ist mit einem Verbindungspunkt eines Arms der zweiten Seite verbunden. Dies gilt insbesondere für alle H-Brücken des Wechselrichters.

Wie erwähnt können die H-Brücken des Wechselrichters jeweils zwei Arme aufweisen. Diese verbinden den positiven Eingangsstromanschluss mit dem negativen Eingangsstromanschluss mittels zweier serieller Halbleiterschalter. Die Halbleiterschalter sind vorzugsweise Transistoren, insbesondere Feldeffekt- oder Bipolar-Transistoren, beispielsweise MOSFETs oder IGBTs.

Jeder Phasenstromanschluss kann über einen Kondensator mit einem Eingangsstromanschluss (insbesondere mit dem den negativen Eingangsstromanschluss) verbunden sein. Mit anderen Worten kann bei jeder H-Brücke parallel zum zweiten Arm (d.h. Arm der zweiten Seite des Wechselrichters) ein Kondensator angeschlossen sein.

Es ist vorgesehen, dass der Wechselstrom-Übertragungsanschluss den Wechselrichter angeschlossen ist, insbesondere an der zweiten Seite des Wechselstrom-Übertragungsanschlusses angeschlossen ist. Der Wechselstrom-Übertragungsanschluss ist mindestens zweiphasig und ist vorzugsweise dreiphasig oder mit mehr als drei Phasen ausgestattet. Der Wechselstrom-Übertragungsanschluss ist insbesondere ein Drehstromanschluss. Die Verbindung zwischen dem Wechselstrom-Übertragungsanschluss und dem Wechselrichter (bzw. dessen zweiter Seite) weist vorzugsweise eine Phasenanzahl auf, die der Phasenanzahl der elektrischen Maschine bzw. der Phasenanschlüsse des Wechselrichters entspricht. Die Phasenanzahl der genannten Verbindung bzw. die Phasenanzahl des Wechselstrom-Übertragungsanschlusses kann insbesondere der Anzahl der H-Brücken des Wechselrichters entsprechen. Alternativ kann die Phasenanzahl des Wechselstrom-Übertragungsanschlusses bzw. der Verbindung geringer sein als die Phasenanzahl der zweiten Seite des Wechselrichters bzw. kann geringer sein als die Anzahl der H-Brücken des Wechselrichters.

Mittels des Wechselstrom-Übertragungsanschlusses (bzw. über die Verbindung) kann Leistung über den Wechselrichter in den elektrischen Energiespeicher eingespeist werden. Insbesondere kann der Wechselstrom-Übertragungsanschluss mit mindestens einem der Phasenstromanschlüsse (bzw. mit allen) verbunden in direkter oder indirekter Weise verbunden sein. Insbesondere umfasst die Verbindung zwischen Wechselstrom-Übertragungsanschluss und dem Wechselrichter (bzw. dessen zweiter Seite) keinen Spannungs- oder Stromwandler. Die Verbindung zwischen Wechselstrom-Übertragungsanschluss und (mindestens einem) Phasenstromanschluss kann einen Filter und/oder Sicherheitselemente wie eine Sicherung und/oder ein Trennschalter aufweisen.

Der Wechselstrom-Übertragungsanschluss kann direkt mit mindestens einem der Phasenstromanschlüsse (oder anderen Komponenten der zweiten Seite des Wechselrichters) verbunden sein. Ferner kann der Wechselstrom-Übertragungsanschluss indirekt über die elektrische Maschine mit mindestens einem der Phasenstromanschlüsse (oder anderen Komponenten der zweiten Seite des Wechselrichters) verbunden sein. Der Wechselstrom-Übertragungsanschluss kann somit direkt oder indirekt (nämlich über die elektrische Maschine) mit dem Wechselrichter verbunden sein. Als "direkt verbunden" wird daher eine Verbindung bezeichnet, die keine elektrische Maschine bzw. keine Wicklungen einer elektrischen Maschine umfasst. Als "direkt verbunden" wird daher eine Verbindung bezeichnet, die keine Schaltung zur Spannungs- oder Stromwandlung aufweist. Als "direkt verbunden" kann eine Verbindung bezeichnet werden, die einen Filter oder und/oder Sicherheitselemente wie eine Sicherung und/oder ein Trennschalter aufweist. Als "indirekt verbunden" kann eine Verbindung bezeichnet werden, die eine elektrische Maschine bzw. eine Wicklungen einer elektrischen Maschine umfasst (etwa in Reihenschaltung). Bei direkter Verbindung kann die Spannung an dem Energiespeicher an die Wechselspannung am Wechselstrom-Übertragungsanschluss angepasst werden. Insbesondere ist kein DC-Booster notwendig. Bei einer indirekten Verbindung kann Wechselstromladen und Gleichstromladen (zur gleichen Zeit) kombiniert werden. Insbesondere kann ein Gleichstrom-Übertragungsanschluss mit (zwei) Phasenanschlüssen des Wechselrichters verbunden werden, wodurch Wechselstrom- und Gleichstromladen (zur gleichen Zeit) ausgeführt werden kann.

Der Wechselstrom-Übertragungsanschluss kann direkt mit den Phasenstromanschlüssen (bzw. dem Wechselrichter bzw. dessen zweiter Seite) verbunden sein. Die Phasenstromanschlüsse bzw. allgemein der Wechselrichter bzw. dessen zweite Seite kann über einen Trennschalter mit der elektrischen Maschine verbunden sein. Dieser Trennschalter dient der Abtrennung der elektrischen Maschine vom Wechselrichter, insbesondere im Lademodus oder im Rückspeisemodus.

Alternativ oder in Kombination hiermit kann ein Trennschalter vorgesehen sein, der zwischen Wicklungen der elektrischen Maschine vorgesehen ist. Der letztgenannte Trennschalter dient zur steuerbaren Aufhebung der Verschaltungskonfiguration der Wicklungen, insbesondere einer Stern- oder Dreieckskonfiguration, insbesondere im Lademodus oder im Rückspeisemodus. Es kann daher ein Trennschalter wie der Letztgenannte zwischen Phasenwicklungen der elektrischen Maschine (in Verbindungen zwischen den Phasenwicklungen der elektrischen Maschine selbst) vorgesehen sein. Der Trennschalter kann eingerichtet sein, in einem ersten Zustand die Wicklungen bzw. deren Enden mit einem gemeinsamen Sternpunkt der elektrischen Maschine zu verbinden, und in einem zweiten Zustand die Verbindung der Wicklungen untereinander getrennt vorzugsehen.

Ein derartiger Trennschalter kann eingerichtet sein, eine Sternverschaltung (oder Dreiecksverschaltung) zumindest teilweise aufzuheben. Der Trennschalter kann als Schalter vorgesehen sein, der zumindest eine der mit dem Wechselstrom-Übertragungsanschluss verbundene Phasenwicklung (der elektrischen Maschine) von anderen Phasenwicklungen abtrennt. Der Schalter kann ferner vorgesehen sein, alle Phasenwicklungen von einem Sternpunkt der elektrischen Maschine oder alle Phasenwicklungen voneinander gesteuert abzutrennen. Vorzugsweise ist der Schalter eingerichtet nur einen Teil der Phasenwicklungen von einem Sternpunkt der elektrischen Maschine oder nur einen Teil der Phasenwicklungen voneinander gesteuert abzutrennen, während die anderen Phasenwicklungen verbunden bleiben.

Der Wechselstrom-Übertragungsanschluss kann wie erwähnt indirekt (d.h. über die elektrische Maschine) mit den Phasenstromanschlüssen bzw. mit dem Wechselrichter verbunden sein.

Der Wechselstrom-Übertragungsanschluss kann über einen Umschalter mit der elektrischen Maschine bzw. deren Wicklungen sein. Der Umschalter ist angeschlossen, die elektrische Maschine bzw. deren Wicklungen in einem ersten Zustand untereinander zu verbinden. Im ersten Zustand sind die Wicklungen beispielsweise mit einem gemeinsamen Sternpunkt der elektrischen Maschine verbunden oder die Wicklungen sind in Reihe miteinander verbunden, d.h. in Dreieckskonfiguration vorgesehen. In diesem Schaltzustand kann bei einer Sternkonfiguration der elektrischen Maschine jeweils ein Ende der Wicklungen miteinander verbunden sein, d.h. die elektrische Maschine kann in Sternkonfiguration vorliegen. Ferner können in diesem Schaltzustand die Wicklungen aneinandergereiht sein im Sinne einer Dreiecks- oder Deltakonfiguration. In einem zweiten Schaltzustand sind die Wicklungen mit dem Wechselstrom-Übertragungsanschluss verbunden. In dem zweiten Schaltzustand ist jeweils ein Ende der Wicklungen mit dem Wechselstrom-Übertragungsanschluss verbunden. Die Wicklungen bzw. die elektrische Maschine sind bzw. ist in Reihe zwischen dem Wechselrichter (d.h. dessen zweite Seite bzw. den Phasenanschlüssen) und dem Wechselstrom-Übertragungsanschluss angeschlossen. Der Umschalter kann n-1 einzelne Umschaltelemente aufweisen, wobei n die Phasenzahl bzw. die Zahl der Wicklungen der elektrischen Maschine ist. Eine Phase bzw. eine Wicklung der elektrischen Maschine kann daher direkt mit dem Wechselstrom-Übertragungsanschluss verbunden sein, wobei alle anderen Phasen bzw. Wicklungen über einzelne Umschaltelemente mit dem Wechselstrom-Übertragungsanschluss verbunden sind. Der Umschalter ist eingerichtet, im zweiten Schaltzustand zum einen die Verbindungen zwischen den Wicklungen (etwa den Sternpunkt bzw. die Dreieckskonfiguration) aufzulösen und zum anderen die Wicklungen (einseitig) mit dem Wechselstrom-Übertragungsanschluss zu verbinden.

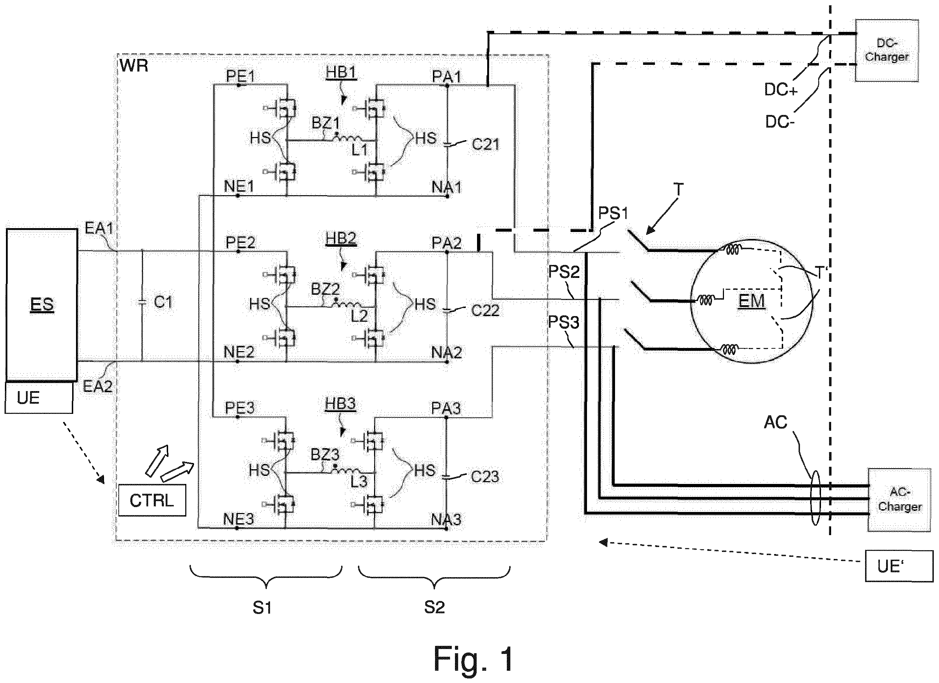

Die H-Brücken des Wechselrichters können auf der ersten und der zweiten Seite des Wechselrichters jeweils einen Arm aufweisen. Diese Arme verbinden den positiven Eingangsstromanschluss mit dem negativen Eingangsstromanschluss mittels zweier serieller Halbleiterschalter. Jeder Arm umfasst vorzugsweise zwei serielle (steuerbare) Halbleiterschalter. Jeder Arm ist parallel zu dem Energiespeicher bzw. zu den Eingangsstromanschlüssen geschaltet. Die beiden Halbleiterschalter jedes Arms sind über einen Verbindungspunkt verbunden. Der Wechselstrom-Übertragungsanschluss kann mit den Verbindungspunkten derjenigen Arme verbunden sein, die auf der zweiten Seite liegen. Mit anderen Worten kann der Wechselstrom-Übertragungsanschluss mit den Verbindungspunkten derjenigen Arme verbunden sein, die der elektrischen Maschine bzw. den Phasenanschlüssen verbunden sind bzw. die auf der Seite des Wechselrichters liegen, die den Eingangsstromanschlüssen entgegengesetzt ist. Ein zusätzlicher Trennschalter (vergleiche die Trennschalter T, T' bzw. den Umschalter T" der Figuren 1-3) sind dann nicht notwendig und können weggelassen oder durch durchgehende Verbindungen ersetzt werden.
Das Fahrzeugbordnetz kann ferner einen Gleichstrom-Übertragungsanschluss aufweisen. Dieser hat eine positive und eine negative Schiene (bzw. einen negativen und einen positiven Anschlusspunkt). Die positive Schiene kann mit einem der Phasenanschlüsse, mit mehreren Phasenanschlüssen, oder mit allen Phasenanschlüsse verbunden sein. Insbesondere wenn die positive Schiene kann mit mehreren Phasenanschlüssen oder mit allen Phasenanschlüsse verbunden ist, kann ein mehrphasiger Trennschalter zwischen dem Gleichstrom-Übertragungsanschluss und den betreffenden Phasenanschlüssen vorgesehen sein. Dieser kann (mittels einer Steuereinheit) im Lademodus und im Rückspeisemodus geschlossen sein und kann im Rekuperationsmodus und im Wechselrichtungsmodus (in dem die elektrische Maschine von dem Wechselrichter gespeist wird) geöffnet sein, um die Phasenanschlüsse elektrisch getrennt vorzusehen. Ferner kann die positive Schiene über die elektrische Maschine an den Wechselrichter bzw. dessen Phasenanschlüsse angeschlossen sein. Es kann ein Auswahlschalter vorgesehen sein, der entweder den Gleichstrom-Übertragungsanschluss oder den Wechselstrom-Übertragungsanschluss mit dem Wechselrichter (direkt oder über die elektrische Maschine) verbindet. Es kann ferner ein Trennschalter dem Gleichstrom-Übertragungsanschluss und/oder den Wechselstrom-Übertragungsanschluss nachgeschaltet sein, wobei eine diesen steuernden Steuereinheit eingerichtet ist, in einem Wechselstrom-Lademodus sowie in einem Wechselstrom-Rückspeisemodus den Gleichstrom-Übertragungsanschluss abzutrennen, und einem Gleichstrom-Lademodus sowie in einem Gleichstrom-Rückspeisemodus den Wechselstrom-Übertragungsanschluss abzutrennen.

Die negative Schiene kann mit einem anderen der Phasenanschlüsse (falls nicht mit der positiven Schiene verbunden) oder mit dem negativen Eingangsanschluss verbunden sein.

Es kann eine Steuerungseinheit (etwa die erwähnte Steuereinheit) vorgesehen sein, die den Wechselrichter ansteuert. Die Steuerungseinheit ist ansteuernd mit dem Wechselrichter verbunden. In einem Wechselrichtungsmodus der Steuerungseinheit wird der Wechselrichter angesteuert, aus der Gleichspannung des Energiespeichers Phasenspannungen zu erzeugen, die an den Phasenanschlüssen anliegen. In einem (optionalen) Rekuperationsmodus steuert die Steuerungseinheit den Wechselrichter an, aus den Phasenspannungen an den Phasenanschlüssen eine Ladespannung an dem Energiespeicher zu erzeugen. In einem (Wechselstrom-)Lademodus steuert die Steuerungseinheit den Wechselrichter an, aus der Spannung, die an dem Wechselstrom-Übertragungsanschluss anliegt, eine Ladespannung an dem Energiespeicher zu erzeugen. Hierbei wird die am Wechselstrom-Übertragungsanschluss anliegende Wechselspannung in eine Gleichspannung des Energiespeichers umgewandelt bzw. gleichgerichtet. In einem (optionalen) (Wechselstrom-)Rückspeisemodus steuert die Steuerungseinheit den Wechselrichter an, aus der Spannung, die an dem Energiespeicher des Fahrzeugbordnetzes anliegt, eine (Wechsel-)Rückspeisespannung an dem Wechselstrom-Übertragungsanschluss zu erzeugen. In einem Gleichstrom-Lademodus steuert die Steuerungseinheit den Wechselrichter an, aus der Spannung, die an dem Gleichstrom-Übertragungsanschluss anliegt, eine Ladespannung an dem Energiespeicher zu erzeugen. Hierbei wird die am Gleichstrom-Übertragungsanschluss anliegende Gleichspannung an ein Spannungsniveau des Energiespeichers angepasst. In einem (optionalen) Gleichstrom-Rückspeisemodus steuert die Steuerungseinheit den Wechselrichter an, aus der Spannung, die an dem Energiespeicher des Fahrzeugbordnetzes anliegt, eine Gleichstrom-Rückspeisespannung an dem Gleichstrom-Übertragungsanschluss zu erzeugen. Es sei nochmals erwähnt, dass der Begriff "Wechselrichter" der besseren Klarheit wegen anhand nur einer Funktion, die während dem Wechselrichtungsmodus ausgeführt wird, bestimmt ist. Wie erwähnt hat der Wechselrichter andere Funktionen bzw. Modi, die nicht in die Begriffsbildung eingeflossen sind. Der Wechselrichter ist daher nicht auf eine Schaltung beschränkt, die ausschließlich zum Wechselrichten der Spannung des Energiespeichers eingerichtet ist.

Die Ladespannung am Energiespeicher kann von einem Batteriemanagementsystem des Energiespeichers oder von einer Rekuperationssteuerung als ein Sollwert vorgegeben werden. Anstatt einer Ladespannung kann auch ein Ladestrom oder eine Ladeleistung als Sollwert vorgegeben werden. Die Phasenspannungen können von einer (übergeordneten) Motorsteuerung der elektrischen Maschine vorgeben werden, entweder direkt als Spannungssollwert oder als Leistungs- oder Drehmomentanforderung. Anstatt von Phasenspannungen können auch Phasenströme wie erwähnt zur Steuerung dienen. Die Rückspeisespannung kann von einer Empfangseinrichtung des Fahrzeugbordnetzes als Sollwert erfasst werden. Die Empfangseinrichtung kann eingerichtet sein, Sollwerte von einer stationären Steuerung zu empfangen. Anstatt einer Rückspeisespannung kann auch ein Rückspeisestrom oder eine Rückspeiseleistung vorgegeben werden.

Die Steuerungseinheit kann eingerichtet sein, zumindest einen der vorangehend genannten Trennschalter, Umschalter und/oder Auswahlschalter anzusteuern. Die Steuerungseinheit kann insbesondere eingerichtet sein, den Trennschalter im Lade- oder im Rückspeisemodus im geöffneten Zustand zu halten. Die Steuerungseinheit kann ferner eingerichtet sein, den Trennschalter im Wechselrichter- oder im Rekuperationsmodus im geschlossenen Zustand zu halten.

Die Steuerungseinheit kann ferner in einem Störungsfall eingerichtet sein, Schalter in allen Brücken des Wechselrichters zu öffnen, etwa wenn eine Ladestörung oder eine Rückspeisestörung auftritt und das Laden oder das Rückspeisen unterbrochen werden soll.

Es kann eine Sperrklinke vorgesehen sein, um die elektrische Maschine zu arretieren (d.h. um eine Drehung zu verhindern) . Die Steuerungseinheit kann eingerichtet sein, die Sperrklinke anzusteuern. Die Steuerungseinheit kann insbesondere eingerichtet sein, die Sperrklinke im Lademodus und ggf. im Rückspeisemodus und zu arretieren und die Sperrklinke im Wechselrichtermodus und ggf. im Rekuperationsmodus nicht zu arretieren.

Falls ein Gleichstrom-Übertragungsanschluss vorgesehen ist, ist es möglich, dass dessen positive Schiene direkt oder über einen Schalter mit mehreren oder vorzugsweise allen Phasenstromanschlüssen verbunden ist. Mit anderen Worten ist der Gleichstrom-Übertragungsanschluss direkt oder über einen Schalter mit den Phasenstromanschlüssen verbunden, vorzugsweise mit allen. Dadurch können im Lademodus bzw. im Rückspeisemodus mehrere oder alle H-Brücken verwendet werden. Der Gleichstrom-Übertragungsanschluss weist eine negative Schiene auf, die mit dem negativen Eingangsstromanschluss des Wechselrichters verbunden ist. Falls ein Schalter verwendet wird, dann ist dieser vorzugsweise mehrphasig. Der Schalter weist für jede Verbindung zwischen einem Phasenanschluss und der positiven Schiene ein Schalterelement bzw. eine Phase auf (bei einem mehrphasigen Schalter). Die Steuerungseinheit ist eingerichtet, im Wechselrichtermodus oder ggf. im Rekuperationsmodus den Schalter in einem geöffneten Zustand zu halten. Die Steuerungseinheit ist ferner eingerichtet, im Lademodus oder ggf. im Rückspeisemodus den Schalter in einem geschlossenen Zustand zu halten. Anstatt, wie vorangehend beschrieben, die positive Schiene mit den Phasenanschlüssen des Wechselrichters zu verbinden, kann die positive Schiene auch über die elektrische Maschine bzw. über deren Phasenwicklungen an die Phasenanschlüsse des Wechselrichters anschlossen sein. Mit anderen Worten kann die positive Schiene indirekt über die elektrische Maschine mit den Phasenstromanschlüssen verbunden sein. Hierbei sind die Phasenwicklungen in Reihe zwischen der positiven Schiene und dem Wechselrichter angeschlossen. Die negative Schiene des Gleichstrom-Übertragungsanschlusses kann mit dem negativen Eingangsstromanschluss des Wechselrichters verbunden sein. Wie erwähnt kann (bezogen auf den Gleichstrom-Übertragungsanschluss) vorzugsweise bei allen hier beschriebenen Varianten der Begriff "positive Schiene" durch "positiven Kontakt" ersetzt werden und der Begriff "negative Schiene" kann durch "negativen Kontakt" ersetzt werden.

Das Fahrzeugbordnetz ist insbesondere das Bordnetz eines Plug-in-Hybridkraftfahrzeugs oder eines Elektrokraftfahrzeugs. Die Figuren 1-3 dienen zur näheren Erläuterung des hier beschriebenen Bordnetzes und zeigen beispielhafte Fahrzeugbordnetze.

Die Figuren 1, 2 und 3 zeigen jeweils ein Fahrzeugbordnetz mit einem Energiespeicher ES und einer elektrischen Maschine EM, die über einen Wechselrichter WR miteinander verbunden sind. Ein Wechselstrom-Übertragungsanschluss AC (in der Figur 1 mit einem "AC-Charger", d.h. einer Wechselstromladestation, außerhalb des Fahrzeugbordnetzes verbunden) ist mit dem Wechselrichter WR verbunden.

In den Figuren 1, 2 und 3 ist der Energiespeicher ES über einen positiven Eingangsstromanschluss EA1 und einen negativen Eingangsstromanschluss EA2 des Wechselrichters WR an diesen angeschlossen. Parallel zu den Eingangsstromanschlüssen EA1, EA2 ist ein Zwischenkreiskondensator C1 angeschlossen. Der Wechselrichters WR umfasst drei H-Brücken HB1 - HB3. Die H-Brücke HB1 weist einen positiven Eingang PE1 und einen negativen Eingang NE1 auf. Die H-Brücke HB2 weist einen positiven Eingang PE2 und einen negativen Eingang NE2 auf. Die H-Brücke HB3 weist einen positiven Eingang PE3 und einen negativen Eingang NE3 auf. Die positiven Eingänge PE1-3 sind untereinander verbunden und ferner mit dem positiven Eingangsanschluss EA1 des Wechselrichters WR verbunden. Die negativen Eingänge NE1-3 sind untereinander verbunden und ferner mit dem negativen Eingangsanschluss EA2 des Wechselrichters WR verbunden. Jede H-Brücke HB1-3 weist zwei Arme auf, die jeweils zwei seriell geschaltete Halbleiterschalter HS aufweisen. Ein erster der Arme jeder H-Brücke (links dargestellt) verbindet jeweils den negativen Eingang und den positiven Eingang der jeweiligen H-Brücke HB1-3. Jede H-Brücke weist einen negativen Ausgang NA1-3 und einen positiven Ausgang NA3 auf. In jeder H-Brücke verbindet ein zweiter der Arme die Ausgänge PA1, NA1; PA2, NA2 bzw. PA3, NA3. Jeder Arm weist zwei Halbleiterschalter HS auf, die in Reihe über einen Verbindungspunkt miteinander verbunden sind. Für jede H-Brücke HB1-3 gilt, dass die Verbindungspunkte der beiden Arme mittels eines Brückenzweigs BZ1-3 miteinander verbunden sind. Der Brückenzweigs BZ1-3, welcher in jeder H-Brücke HB1-3 die Verbindungspunkte der beiden Arme verbindet, weist eine in Reihe angeschlossene Induktivität L1-3 auf. Mit anderen Worten verbindet die Induktivität L1-3 in jedem der H-Brücken HB1-3 die Verbindungspunkte der Halbleiterschalter HS der beiden Arme. Jeder Phasenanschluss ist über einen Kondensator C21-23 mit dem negativen Eingangsstromanschluss EA2 bzw. mit den negativen Eingängen NE1-3 der H-Brücken HB1-3 verbunden. Die positiven Ausgänge PA1-PA3 der H-Brücken HB1-HB3 entsprechen Phasenstromanschlüssen des Wechselrichters WR. Aus diesem Grund die positiven Ausgänge PA1-PA3 der H-Brücken HB1-3 und die Phasenstromanschlüsse PS1-3 des Wechselrichters WR als Äquivalent zueinander betrachtet werden. Der Wechselrichter weist eine erste Seite S1 und eine zweite Seite S2 auf. Die erste Seite S1 ist mit dem Energiespeicher ES verbunden bzw. umfasst die Eingangsstromanschlüsse EA1 und EA2. Die zweite Seite S2 Mit gestrichelter Linie ist die Schnittstelle zwischen Fahrzeugbordnetz und stationären Einrichtungen (Gleichstrom-Ladegerät "DC-Charger" und Wechselstrom-Ladegerät "AC-Charger") dargestellt. An dieser Schnittstelle befinden sich der Gleichstrom-Übertragungsanschluss und ggf. der Wechselstrom-Übertragungsanschluss. Links der gestrichelten Linie ist das hier beschriebene Fahrzeugbordnetz dargestellt.

Nachdem Gemeinsamkeiten der Figuren 1-3 erwähnt wurden, wird in Weiteren auf hauptsächliche Unterschiede der Figuren 1-3 eingegangen:
In der Schaltung der Figur 1 ist der Wechselstromanschluss AC mit den Phasenanschlüssen PS1-3 (direkt) verbunden. Die am Wechselstromanschluss AC anliegende Wechselspannung wird an der zweiten Seite S2 des Wechselrichters WR eingespeist, insbesondere über die Phasenanschlüsse PA1-3. Die dargestellten Phasenanschlüsse PA1-3 bilden ein dreiphasiges System, wie auch der dargestellte Wechselstromanschluss AC dreiphasig ausgebildet ist. Ein optionaler Gleichstrom-Übertragungsanschlusses (Verbindung zum Wechselrichter gestrichelt dargestellt) mit einer positiven Schiene DC+ und einer negativen Schiene DC- kann an zwei Phasenanschlüsse angeschlossen sein. Dargestellt ist, dass die positiven Schiene DC+ mit dem Phasenanschluss PA1 und die negative Schiene DC- mit dem Phasenanschluss PA2 verbunden ist. Der optionale Gleichstrom-Übertragungsanschluss ist mit der zweiten Seite des Wechselrichters WR verbunden. Entweder wird über den Gleichstrom-Übertragungsanschluss DC+, DC- oder über den Wechselstrom-Übertragungsanschluss AC Leistung übertragen.

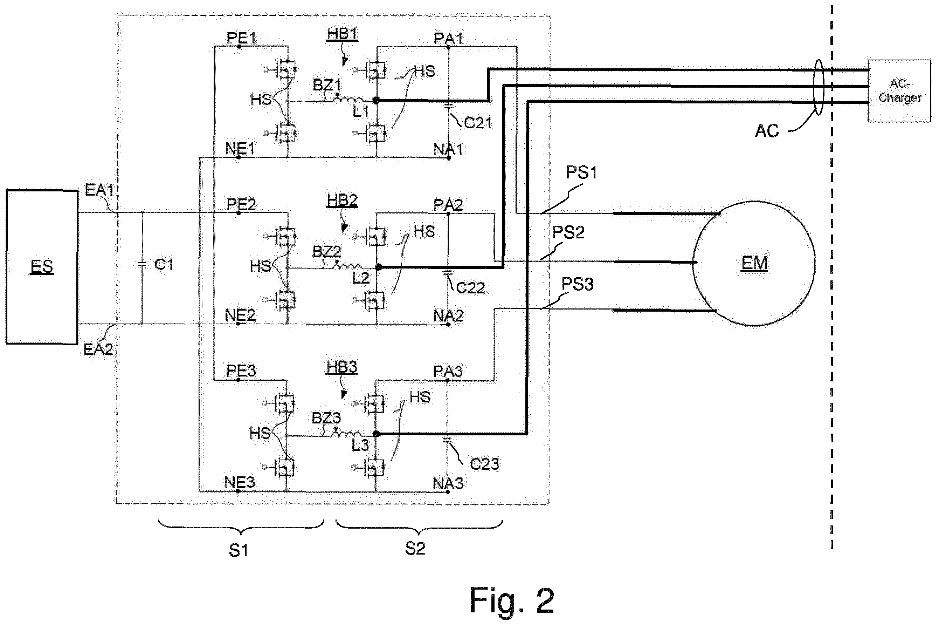

In der Schaltung der Figur 2 wird Wechselstrom über den Wechselstrom-Übertragungsanschlusses AC ebenso an die zweite Seite S2 des Wechselrichters übertragen. Der Wechselstrom-Übertragungsanschluss AC ist jedoch nicht mit den Phasenanschlüssen PA1-PA3 direkt verbunden (siehe Fig. 1), sondern ist mit Verbindungspunkten von Halbleiterschaltern HS von Armen der H-Brücken HB1-3 verbunden. Dies betrifft die Arme der H-Brücken HB1-3, welche auf der zweiten Seite des Wechselrichters vorliegen, insbesondere die Arme, welche direkt mit den Phasenanschlüssen PA1-3 verbunden sind.

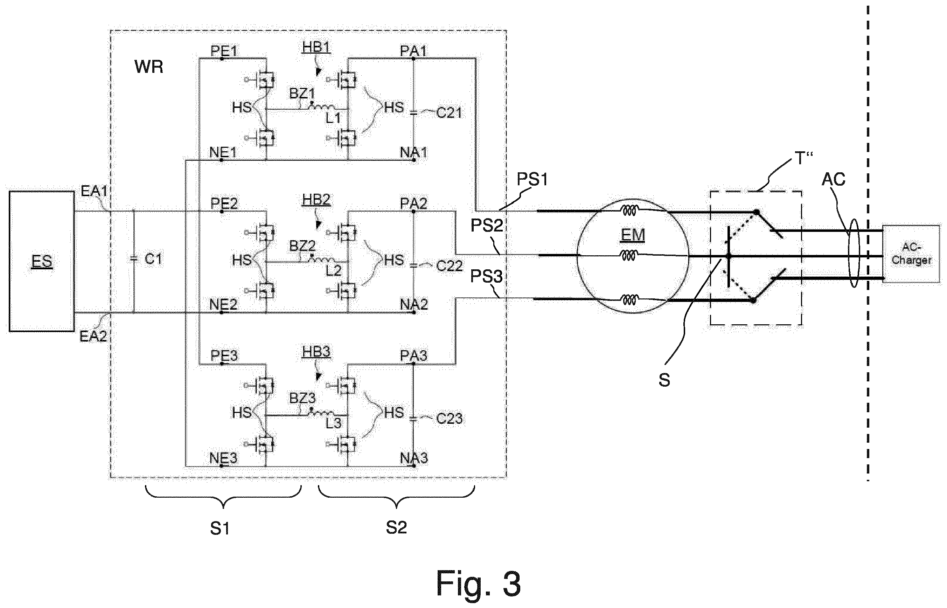

In der Figur 3 ist der Wechselstrom-Übertragungsanschluss AC über die elektrische Maschine EM mit den Phasenanschlüssen PS1-3 verbunden. Die am Wechselstromanschluss AC anliegende Wechselspannung wird über die elektrische Maschine EM, deren Wicklungen in Reihe zwischen dem Wechselstrom-Übertragungsanschluss AC und dem Wechselrichters WR geschaltet sind, an der zweiten Seite S2 des Wechselrichters WR eingespeist, insbesondere über die Phasenanschlüsse PS1-3. Ein Umschalter T' verbindet die Wicklungen wahlweise entweder in Sternkonfiguration, oder erzeugt eine geöffnete Konfiguration der Wicklungen, bei der diese mehrphasig mit dem mehrphasigen Wechselstrom-Übertragungsanschluss AC verbunden sind. In der geöffneten Konfiguration sind die Wicklungen nicht miteinander verbunden, sondern die Phasen der elektrischen Maschine EM sind elektrisch getrennt voneinander und als getrennte Elemente in jeder Phase in Reihe zwischen den einzelnen Phasenanschlüssen des mehrphasigen Wechselstrom-Übertragungsanschlusses AC und den Phasenanschlüssen PS1-3 des Wechselrichters WR angeschlossen.

Nachdem einige Unterschiede zwischen den Schaltungen der Figuren 1 - 3 dargestellt wurden, werden die Figuren 1-3 näher beschrieben.

In der Figur 1 ist der Wechselstrom-Übertragungsanschluss AC (dreiphasig) mit den drei Phasenanschlüssen PS1-3 des Wechselrichters WR verbunden. Dargestellt sind die einzelnen Phasen der Verbindungen. Ein Trennschalter T ist dargestellt, der mehrphasig ist und der die einzelnen Phasenwicklungen der elektrischen Maschine EM (bzw. die elektrische Maschine EM selbst) von den Phasenstromanschlüssen PS1-3 des Wechselrichters WR trennt. Der Trennschalter T trennt somit steuerbar die elektrische Maschine EM von dem Wechselrichter WR. Alternativ kann ein Trennschalter T' innerhalb der elektrischen Maschine EM verwendet werden, der die Phasenwicklungen der elektrischen Maschine EM (etwa in Sternkonfiguration) auftrennt. Der Trennschalter T' löst somit die Sternkonfiguration der elektrischen Maschine EM auf, sofern dieser in geöffnetem Zustand ist. Wird Energie über einen der Übertragungsanschlüsse (AC oder DC+/DC-) übertragen, dann ist der Trennschalter T oder T' in offenem Zustand.

Der Wechselstrom-Übertragungsanschluss AC ist Teil des Fahrzeugbordnetzes. Der Wechselstrom-Übertragungsanschluss AC ist mit den Phasenanschlüssen PS1-3 des Wechselrichters WR verbunden. Wenn Leistung vom Wechselstrom-Übertragungsanschluss AC in das Fahrzeugbordnetz eingespeist wird, dann arbeitet der Wechselrichter als Umsetzer zur Wandlung der Wechselstromleistung in Gleichspannung zum Laden des Energiespeichers ES. Der Wechselrichter übernimmt in diesem Modus und in dieser Übertragungsrichtung die Funktion eines Gleichrichters und ggf. die Funktion einer Leistungs- oder Stromsteuerung oder auch einer Spannungsregelung.

Ein optionaler Gleichstrom-Übertragungsanschluss, der auch in den Schaltungen der Figuren 2 und 3 verwendet werden kann, weist eine positive Schiene DC+ (entsprechend einem positiven Kontakt) auf, der mit dem Phasenanschluss PS1 (entsprechend einem positiven Ausgang PA1) einer ersten H-Brücke HB1 verbunden ist. Ferner ist die negative Schiene DC+ (entsprechend einem negativen Kontakt) des Gleichstrom-Übertragungsanschlusses mit dem Phasenanschluss PS2 (entsprechend einem weiteren positiven Ausgang PA2) einer weiteren H-Brücke HB2 verbunden.

In der Figur 2 ist Wechselstrom-Übertragungsanschluss AC mehrphasig mit Verbindungspunkten zwischen Halbleiterschaltern HS der H-Brücken HB1-3 verbunden. Der Wechselstrom-Übertragungsanschluss AC ist direkt mit den Brückenzweigen BZ1-3 der H-Brücken HB1-3 verbunden, insbesondere mit einem Abschnitt der Brückenzweige BZ1-3, der in der zweiten Seite S2 des Wechselrichters WR liegt. Mit anderen Worten ist der Wechselstrom-Übertragungsanschluss AC mit Mittelabgriffen der H-Brücken HB1-3 verbunden, insbesondere mit den Mittelabgriffen, die in der zweiten Seite S2 liegen bzw. nur über einen Halbleiterschalter HS mit den Phasenanschlüssen verbunden sind. Die zweite Seite S2 ist mit der elektrischen Maschine EM und dem Wechselstrom-Übertragungsanschluss AC verbunden und die erste Seite S1 ist mit dem Energiespeicher ES verbunden.

In der Figur 3 ist Wechselstrom-Übertragungsanschluss AC (mehrphasig) über die Wicklungen der elektrischen Maschine EM mit den Phasenstromanschlüssen PS1-3 verbunden. Ein Umschalter T'' verbindet in einer ersten Schalterstellung die Wicklungen untereinander in Sternkonfiguration und in einer zweiten Schalterstellung den Wechselstrom-Übertragungsanschluss AC über die seriell geschalteten Wicklungen mit den Phasenanschlüssen PS1-3. Der Umschalter T'' ist dreiphasig und weist zwei einzelne Umschaltelemente auf. Diese verbinden in der ersten Schalterstellung zwei der drei Phasenwicklungen mit dem Sternpunkt.

Die dritte Phasenwicklung der elektrischen Maschine ist direkt und nicht über ein Umschaltelement mit dem Wechselstrom-Übertragungsanschluss AC (bzw. einem einzelnen Phasenanschluss hiervon) verbunden. Der Umschalter T" betrifft nicht alle Phasen der elektrischen Maschine EM bzw. des Anschlusses AC. Einer der drei Phasenanschlüsse des Wechselstrom-Übertragungsanschlusses AC (in Figur 3 der mittlere) ist mit einem Sternpunkt der elektrischen Maschine EM (dauerhaft) verbunden, während die anderen Phasenanschlüsse des Wechselstrom-Übertragungsanschlusses AC jeweils über ein Umschaltelement mit der elektrischen Maschine verbunden sind. Ist der Umschalter wie gestrichelt dargestellt im ersten Schaltzustand, sind die Wicklungen der elektrischen Maschine EM (bzw. ein jeweiliges Ende hiervon) zusammengeschaltet und es ergibt sich eine Sternkonfiguration für die Phasenwicklungen der Maschine. Ist der Umschalter wie mit durchgezogener Linie dargestellt im zweiten Schaltzustand, sind die Wicklungen in Reihe zwischen den Phasenanschlüssen PS1-3 des Wechselrichters und dem Wechselstrom-Übertragungsanschluss AC angeschlossen.

Die Figuren 2 und 3 sind ohne Gleichstrom-Übertragungsanschluss dargestellt. Jedoch können die dort dargestellten Fahrzeugbordnetze einen Gleichstrom-Übertragungsanschluss aufweisen, der mit einer oder mehreren (oder auch allen) Phasenstromanschlüssen PS1-3 des Wechselrichters WR verbunden ist.

Zur besseren Übersicht zeigt nur die Figur 1 eine Steuereinheit CTRL des Wechselrichters, welche jedoch auch Teil der Bordnetze der Figuren 2 und 3 sein kann. Die Steuereinheit CTRL steuert die Halbleiterschalter HB bzw. die Brücken HB1-3 an, wie durch die Doppelpfeile angedeutet ist. Eine übergeordnete Steuerung kann je nach Modus von einer Steuerung UE der Batterie in Form eines Batteriemanagementsystems gebildet werden, oder von einer Steuerung UE', die stationär ist. Die übergeordnete Steuerung UE bzw. UE' steuert (wie durch die gestrichelten Pfeile angedeutet) die Steuereinheit CTRL an, insbesondere durch Übermittlung eines Sollwerts. Das Fahrzeugbordnetz kann eine Empfangseinheit zur Übermittlung von Signalen von stationären Komponenten an die Steuereinheit CTRL des Fahrzeugbordnetzes aufweisen. Auch die Schaltungen der Figuren 2 und 3 können zumindest eine derartige Steuerung CTRL, UE oder UE' aufweisen. Ferner kann die Steuereinheit CTRL ansteuernd mit den Trennschaltern T, T' oder dem Umschalter T'' verbunden sein und für diese bei unterschiedlichen Modi des Wechselrichters unterschiedliche Schaltzustände ansteuern.

In den Figuren 1-3 sind Kondensatoren C21-C23 dargestellt, die jeweils einen Phasenanschluss PS1-3 (entsprechend einem positiven Ausgang PA1-3 des Wechselrichters WR) mit einem negativen Eingangsstromanschluss EA2 des Wechselrichters WR verbinden. Alle positiven Eingangsanschlüsse PE1-3 der H-Brücken HB1-3 sind mit positiven Ausgangsanschlüssen PA1-3 der H-Brücken HB1-3 verbunden. Diese sind wiederum mit positiven Eingangsstromanschluss EA1 des Wechselrichters WR verbunden. Alle negativen Eingangsanschlüsse NE1-3 der H-Brücken HB1-3 sind mit den negativen Eingangsanschlüsse NA1-3 der H-Brücken HB1-3 verbunden. Diese sind wiederum mit negativen Ausgangsanschluss EA2 verbunden. Zwischen dem positiven Eingangsstromanschluss EA1 und dem negativen Eingangsstromanschluss EA2 (bzw. zwischen allen positiven und allen negativen Eingangsanschlüssen der H-Brücken HB1-3) ist ein Kondensator C1 angeschlossen.

## Patentansprüche

1. Fahrzeugbordnetz mit einem Wechselrichter (WR), einem elektrischen Energiespeicher (ES), einer elektrischen Maschine (EM) und einem Wechselstrom-Übertragungsanschluss (AC), wobei
- der Wechselrichter (WR) eine erste Seite (S1) und eine zweite Seite (S2) aufweist und eingerichtet ist, Leistung zwischen diesen Seiten zu übertragen,
- die erste Seite (S1) des Wechselrichters (WR) über einen positiven und einen negativen Eingangsstromanschluss (EA1, EA2) des Wechselrichters (WR) mit dem Energiespeicher (ES) verbunden ist;
- die zweite Seite (S2) des Wechselrichters (WR) über mindestens zwei Phasenstromanschlüsse (PS1, PS2, PS3) des Wechselrichters (WR) mit der elektrischen Maschine (EM) verbunden ist und
- der Wechselrichter (WR) mindestens zwei H-Brücken (HB1, HB2, HB3) aufweist, wobei jede der H-Brücken (HB1, HB2, HB3) die beiden Seiten (S1, S2) des Wechselrichters (WR) überbrückt, wobei der Wechselstrom-Übertragungsanschluss (AC) an der zweiten Seite (S2) des Wechselrichters (WR) angeschlossen ist, **dadurch gekennzeichnet, dass** jede H-Brücke zwei Arme umfasst, ein erster dieser Arme die beiden Eingangsstromanschlüsse (EA1, EA2) verbindet, ein zweiter dieser Arme einen Eingangsstromanschluss (EA2) und einen Phasenstromanschluss (PA1 - 3) verbindet und jeder Arm zwei Schaltelemente (HS) umfasst, die über einen Verbindungspunkt miteinander verbunden sind.

2. Fahrzeugbordnetz nach Anspruch 1, wobei der Wechselstrom-Übertragungsanschluss (AC) direkt mit mindestens einem der Phasenstromanschlüsse (PS1, PS2, PS3) verbunden ist oder indirekt über die elektrische Maschine (EM) mit mindestens einem der Phasenstromanschlüsse (PS1, PS2, PS3) verbunden ist.

3. Fahrzeugbordnetz nach Anspruch 1 oder 2, wobei der Wechselstrom-Übertragungsanschluss (AC) direkt mit den Phasenstromanschlüssen (PS1, PS2, PS3) verbunden ist und die Phasenstromanschlüsse (PS1, PS2, PS3) über einen Trennschalter (T) mit der elektrischen Maschine verbunden sind.

4. Fahrzeugbordnetz nach Anspruch 1 oder 2, wobei der Wechselstrom-Übertragungsanschluss (AC) indirekt über die elektrische Maschine (EM) mit den Phasenstromanschlüssen (PS1, PS2, PS3) verbunden ist.

5. Fahrzeugbordnetz nach Anspruch 4, wobei der Wechselstrom-Übertragungsanschluss (AC) über einen Umschalter (T") mit der elektrischen Maschine verbunden ist, der Wicklungen der elektrischen Maschine (EM) in einem ersten Zustand untereinander verbindet und in einem zweiten Zustand mit dem Wechselstrom-Übertragungsanschluss (AC) verbindet.

6. Fahrzeugbordnetz nach einem der vorangehenden Ansprüche, wobei der erste Arm in der ersten Seite gelegen ist und der zweite Arm in der zweiten Seite gelegen ist.

7. Fahrzeugbordnetz nach einem der vorangehenden Ansprüche, wobei die H-Brücken (HB1, HB2, HB3) des Wechselrichters (WR) jeweils die zwei Arme aufweisen, die den positiven Eingangsstromanschluss (EA1) mit dem negativen Eingangsstromanschluss (EA2) mittels zweier serieller Halbleiterschalter (HS) verbinden und wobei die Halbleiterschalter (HS) jedes Arms an den Verbindungspunkten miteinander verbunden sind, wobei ferner die beiden Verbindungspunkte jeder H-Brücke mittels einer Induktivität (L1 - L3) miteinander verbunden sind.

8. Fahrzeugbordnetz nach Anspruch 7, wobei die Induktivitäten als diskretes Bauelement ausgestaltet sind.

9. Fahrzeugbordnetz nach Anspruch 7 oder 8, wobei die Induktivitäten als Spule mit Kern ausgebildet sind.

10. Fahrzeugbordnetz nach einem der vorangehenden Ansprüche, das ferner einen Gleichstrom-Übertragungsanschluss (DC+, DC-) mit einer positiven und einer negativen Schiene aufweist, wobei die positive Schiene mit einem der Phasenanschlüsse (PS1, PS2, PS3) verbunden ist und die negative Schiene mit einem anderen der Phasenanschlüsse (PS2, PS3, PS1) oder mit dem negativen Eingangsanschluss (EA2) verbunden ist.

## Claims

1. Vehicle electrical system having an inverter (WR), an electrical energy store (ES), an electrical machine (EM) and an AC transmission terminal (AC), wherein
- the inverter (WR) has a first side (S1) and a second side (S2) and is configured to transmit power between these sides,
- the first side (S1) of the inverter (WR) is connected to the energy store (ES) via a positive and a negative input current terminal (EA1, EA2) of the inverter (WR);
- the second side (S2) of the inverter (WR) is connected to the electrical machine (EM) via at least two phase current terminals (PS1, PS2, PS3) of the inverter (WR), and
- the inverter (WR) has at least two H-bridges (HB1, HB2, HB3), each of the H-bridges (HB1, HB2, HB3) bypassing the two sides (S1, S2) of the inverter (WR), the AC transmission terminal (AC) being connected to the second side (S2) of the inverter (WR) **characterized in that**
- each H-bridge comprises two arms, a first of these arms connects the two input current terminals (EA1, EA2), a second of these arms connects an input current terminal (EA2) and a phase current terminal (PA1 - 3) and each arm comprises two switching elements (HS) connected to one another via a connecting point.

2. Vehicle electrical system according to Claim 1, wherein the AC transmission terminal (AC) is connected to at least one of the phase current terminals (PS1, PS2, PS3) directly or is connected to at least one of the phase current terminals (PS1, PS2, PS3) indirectly via the electrical machine (EM).

3. Vehicle electrical system according to Claim 1 or 2, wherein the AC transmission terminal (AC) is connected to the phase current terminals (PS1, PS2, PS3) directly and the phase current terminals (PS1, PS2, PS3) are connected to the electrical machine via an isolator switch (T).

4. Vehicle electrical system according to Claim 1 or 2, wherein the AC transmission terminal (AC) is connected to the phase current terminals (PS1, PS2, PS3) indirectly via the electrical machine (EM).

5. Vehicle electrical system according to Claim 4, wherein the AC transmission terminal (AC) is connected to the electrical machine via a changeover switch (T'') that in a first state connects windings of the electrical machine (EM) to one another and in a second state connects said windings to the AC transmission terminal (AC).

6. Vehicle electrical system according to one of the preceding claims, wherein the first arm is situated in the first side and the second arm is situated in the second side.

7. Vehicle electrical system according to one of the preceding claims, wherein the H-bridges (HB1, HB2, HB3) of the inverter (WR) each have the two arms connecting the positive input current terminal (EA1) to the negative input current terminal (EA2) by means of two series semiconductor switches (HS) and wherein the semiconductor switches (HS) of each arm are connected to one another at the connecting points, the two connecting points of each H-bridge further being connected to one another by means of an inductance (L1 - L3).

8. Vehicle electrical system according to Claim 7, wherein the inductances are embodied as a discrete component.

9. Vehicle electrical system according to Claim 7 or 8, wherein the inductances are in the form of a coil with a core.

10. Vehicle electrical system according to one of the preceding claims, which further has a DC transmission terminal (DC+, DC-) having a positive and a negative rail, the positive rail being connected to one of the phase terminals (PS1, PS2, PS3) and the negative rail being connected to another of the phase terminals (PS2, PS3, PS1) or to the negative input terminal (EA2).

## Revendications

1. Réseau de bord de véhicule comprenant un onduleur (WR), un accumulateur d'énergie électrique (ES), une machine électrique (EM) et une borne de transmission de courant alternatif (AC), dans lequel
- l'onduleur (WR) présente un premier côté (S1) et un deuxième côté (S2) et est conçu pour transmettre de la puissance entre lesdits côtés,
- le premier côté (S1) de l'onduleur (WR) est connecté à l'accumulateur d'énergie (ES) par l'intermédiaire de bornes de courant d'entrée positive et négative (EA1, EA2) de l'onduleur (WR) ;
- le deuxième côté (S2) de l'onduleur (WR) est connecté à la machine électrique (EM) par l'intermédiaire d'au moins deux bornes de courant de phase (PS1, PS2, PS3) de l'onduleur (WR) et
- l'onduleur (WR) présente au moins deux ponts en H (HB1, HB2, HB3), dans lequel chacun des ponts en H (HB1, HB2, HB3) établit un pont entre les deux côtés (S1, S2) de l'onduleur (WR), dans lequel la borne de transmission de courant alternatif (AC) est connectée au deuxième côté (S2) de l'onduleur (WR), **caractérisé en ce que** chaque pont H comprend deux bras, un premier desdits bras connecte les deux bornes de courant d'entrée (EA1, EA2), un deuxième desdits bras connecte une borne de courant d'entrée (EA2) et une borne de courant de phase (PA1-3), et chaque bras comprend deux éléments de commutation (HS) connectés l'un à l'autre par un point de connexion.

2. Réseau de bord selon la revendication 1, dans lequel la borne de transmission de courant alternatif (AC) est directement connectée à au moins l'une des bornes de courant de phase (PS1, PS2, PS3) ou est indirectement connectée par l'intermédiaire de la machine électrique (EM) à au moins l'une des bornes de courant de phase (PS1, PS2, PS3).

3. Réseau de bord de véhicule selon la revendication 1 ou 2, dans lequel la borne de transmission de courant alternatif (AC) est directement connectée aux bornes de courant de phase (PS1, PS2, PS3) et les bornes de courant de phase (PS1, PS2, PS3) sont connectées à la machine électrique par l'intermédiaire d'un sectionneur (T).

4. Réseau de bord de véhicule selon la revendication 1 ou 2, dans lequel la borne de transmission de courant alternatif (AC) est indirectement connectée aux bornes de courant de phase (PS1, PS2, PS3) par l'intermédiaire de la machine électrique (EM).

5. Réseau de bord de véhicule selon la revendication 4, dans lequel la borne de transmission de courant alternatif (AC) est connectée à la machine électrique par l'intermédiaire d'un commutateur (T'') qui connecte entre eux les enroulements de la machine électrique (EM) dans un premier état et les connecte à la borne de transmission de courant alternatif (AC) dans un deuxième état.

6. Réseau de bord de véhicule selon l'une des revendications précédentes, dans lequel le premier bras est situé sur le premier côté et le deuxième bras est situé sur le deuxième côté.

7. Réseau de bord de véhicule selon l'une des revendications précédentes, dans lequel les ponts en H (HB1, HB2, HB3) de l'onduleur (WR) comportent chacun les deux bras, qui connectent la borne de courant d'entrée positive (EA1) à la borne de courant d'entrée négative (EA2) au moyen de deux commutateurs à semi-conducteurs en série (HS) et dans lequel les commutateurs à semi-conducteurs (HS) de chaque bras sont connectés entre eux aux points de connexion, dans lequel les deux points de connexion de chaque pont en H sont en outre connectés entre eux au moyen d'une inductance (L1 - L3).

8. Réseau de bord de véhicule selon la revendication 7, dans lequel les inductances sont réalisées sous forme de composant discret.

9. Réseau de bord de véhicule selon la revendication 7 ou 8, dans lequel les inductances sont réalisées sous forme de bobine à noyau.

10. Réseau de bord de véhicule selon l'une des revendications précédentes, comportant en outre une borne de transmission de courant continu (DC+, DC-) présentant un rail positif et un rail négatif, dans lequel le rail positif est connecté à l'une des bornes de phase (PS1, PS2, PS3) et le rail négatif est connecté à une autre des bornes de phase (PS2, PS3, PS1) ou à la borne d'entrée négative (EA2).
